# EUROPEAN PATENT SPECIFICATION

(11) **EP 3 947 089 B1**
(45) Date of publication and mention of the grant of the patent: **11.01.2023**
(21) Application number: 19717776.9
(22) Date of filing: 02.04.2019
(51) Int. Cl.: B60W 50/06, B60W 30/14

(54) **AN ON-BOARD CONTROL SYSTEM FOR OPERATING A VEHICLE**
BORDSTEUERUNGSSYSTEM ZUM BETRIEB EINES FAHRZEUGS
SYSTÈME DE COMMANDE EMBARQUÉ POUR COMMANDER UN VÉHICULE

(43) Date of publication of application: 09.02.2022
(73) Proprietor: VOLVO TRUCK CORPORATION, 405 08 Göteborg (SE)
(72) Inventor: BORA, Teodoro, 412 62 Göteborg (SE); FRIES, Johan, 443 70 Gråbo (SE); BOISSON, Laurent, 69420 Condrieu (FR)
(74) Representative: Kransell & Wennborg KB
(86) International application number: PCT/EP2019/058310
(87) International publication number: WO 2020/200433

(56) References cited:
- DE-A1-102004 058 359
- DE-A1-102008 034 910
- US-A- 5 406 488
- US-A1- 2018 164 810
- US-B1- 6 278 931

## Description

### TECHNICAL FIELD

The present invention relates to an on-board control system for operating a vehicle, the control system comprising processing circuitry and a plurality of sensors arranged with the vehicle. The control system employs a vehicle control model for operating the vehicle, where the vehicle control model is specifically adapted for the vehicle based on an ongoing operation of the vehicle. The present invention also relates to a corresponding computer implemented method and to a computer program product.

### BACKGROUND

Recently there have been great advances in the semi or fully autonomous operation of a vehicle, effectively providing driver assistance and safety functions, such as cruise control, etc. Conventional cruise control systems fulfil the function of speed control of the vehicle, where a desired speed is selected by the driver and an on-board control system operates on the engine of the vehicle to maintain the desired speed.

When the traffic is light, this simple speed control may be acceptable to the driver, however as soon as slightly more complicated traffic situations occur the operation of the vehicle will be experienced as "jerky" for anyone travelling with the vehicle. Accordingly, a more advanced scheme is desirable for controlling the operation of the vehicle.

An example of such a scheme is presented in US9849880, where a model of the vehicle is used. The vehicle control model in turn provides an output to a nonlinear model predictive cruise control routine, whereby it may be possible to provide the technical result of reducing vehicle torque demand swings while operating a vehicle in a cruise control mode. This is in US9849880 achieved by taking into account a priori road grade information. Furthermore, in US9849880 the vehicle control model may be updated in real-time while the vehicle is in cruise control mode, allowing for an adjustment of a torque control strategy from a constant torque output to a pulse and glide torque output, thereby allowing multiple torque solution strategies from the controller for same driving conditions.

Even though the solution in US9849880 presents an interesting approach to control of the vehicle operation, it is overly complicated and relies on said a priori road grade information. Accordingly, there appears to be room for further improvements in regards to the scheme to be used for operational control of the vehicle, specifically targeted towards computational efficiency suitable for an in-vehicle implementation, possibly also allowing for improved robustness of the vehicle operation.

Further attention is drawn to US2018164810, presenting a computer-implemented method for operating an autonomous driving vehicle (ADV) where a speed control parameter modeling mechanism is utilized to increase the speed control modeling accuracy utilizing a machine learning modeling method and an empirical modeling method.

Additionally, in US6278931 there is disclosed a motor vehicle cruise control which produces a desired throttle position that is based in part on a selectively updated integral term. The integral term is only updated when the magnitude of the speed error exceeds a predefined value, thereby eliminating changes in the integral term when the speed error is smaller than the predefined threshold.

### SUMMARY

According to an aspect of the present invention, the above is at least partly alleviated by an on-board control system for operating a vehicle, as defined by claim 1.

The present invention is based upon the realization that the operational control of the vehicle may be improved by introducing an updatable vehicle control model. Since the vehicle control model may be e.g. iteratively updated based on how well the vehicle control model "behaves", the initially used vehicle control model may be fairly generalized and not necessarily explicitly adapted for the specific vehicle. This makes the inventive control strategy specifically useful in situations where different vehicles of the same type/make/model have inherent differences, such as based on differences in the manufacturing of the different vehicles.

Furthermore, using an iteratively updatable vehicle mode, where the vehicle control model should be interpreted as an expected behavior of at least some portions of the vehicle, allows for an in comparison smoother operation of the vehicle since a transient phase can be drastically reduced and the overall control strategy improved. Such a feature is particularly important for applications demanding high precise speed/acceleration control, such as for example in relation to an autonomous vehicle.

Further advantages following the use of the presented control scheme, by means of the updating vehicle control model, is that it permits the system to adapt for unpredictable situations as ageing of components, changes in the vehicle characteristics, environmental conditions, etc.

It is worth noticing that the expression "autonomous vehicle", as used above, should be interpreted broadly and relates to a vehicle that is operated in a fully or partially autonomous mode. In a partially autonomous vehicle some functions can optionally be manually controlled (e.g. by a driver) some or all of the time. Further, a partially autonomous vehicle may be configured to switch between a fully-manual operation mode and a partially-autonomous and/or a fully-autonomous operation mode.

The processing circuitry may in one embodiment be an electronic control unit (ECU) that typically is provided as an onboard component of the vehicle. Correspondingly, the sensors may for example include sensors for determining an intermediate operation of the vehicle, such as including speed, acceleration, inclination, torque, vehicle mass, etc. Consequently, in a preferred embodiment the vehicle state values are selected from a group comprising one or a plurality of a road inclination, a vehicle mass, a speed of the vehicle, power limits for the vehicle, gear box ratio, etc. Other sensors, real and virtual, may be used/included and are considered within the scope of the present disclosure. A virtual sensor may be seen as providing a value that not necessary is measured, but rather determined and/or acquired through a user interface or from information recorded at the vehicle.

In line with the present invention, the processing circuitry implements a control function, and the control function receives the difference between the reference control value and the vehicle data. The control function may in turn be implemented as a PID controller. Accordingly, the control function will in such an embodiment function together with the vehicle control model for controlling the operation of the vehicle. In comparison to a prior-art solution only using e.g. a PID controller, the implementation according to the present invention will allow for the e.g. PID controller to be greatly simplified, since the PID controller must not be adapted for all different situations. That is, the vehicle control model may in such embodiments be seen as being used for compensation rather than direct control of the vehicle. A further advantage following the present invention is that the inclusion of the updatable vehicle control model simplifies the design of the control function, such as in regards to a closed-loop controller.

In line with the present invention, an output from the control function is combined with the compensation control value for forming a control signal, and the control signal is applied to operate the vehicle. Accordingly and in line with the above discussion, the compensation control value provided by the vehicle control model is combined with the output from the control function for operating the vehicle.

As an example, the reference control value may in one embodiment be selected to be a desired acceleration value and or a desired speed value for the vehicle. Such reference control value may thus be selected for operating the vehicle in e.g. a cruise control mode. However, other reference control values may be possible and within the scope of the present invention, such as controlling the vehicle in regards to a desired torque value, etc. Accordingly, the scheme as presented in line with the present invention is adaptable for operating different vehicle functionality.

Preferably, the vehicle data is a measured output resulting from the operation of the vehicle.

In some embodiments, the same or similar sensors may be used for determining the current operational state of the vehicle. Other sensors may of course also be included.

Furthermore, in an embodiment of the present invention the predetermined threshold is dependent on the reference control value. As an example, the threshold must not necessarily be fixed, but may be dependent on what is desired to be controlled (e.g. desired acceleration value and or a desired speed value for the vehicle), where different reference control value (entities) may be selected to have different thresholds.

In a preferred embodiment of the present invention, the updated vehicle control model is transmitted to a remote server arranged off-board the vehicle arranged in networked communication with the processing circuitry. Accordingly, in case the vehicle control model is updated, this updated vehicle control model may possibly be shared with e.g. other similar vehicle types. As a result, the vehicle receiving the updated vehicle control model may in turn "work" on the vehicle control model to make it specific for that vehicle.

Furthermore, vehicle control models may in some embodiments be mission specific or specific for a road portion, country, altitude, etc. As an example, a vehicle starting a specific mission may in some embodiment be provided (e.g. received from the remote server) with such a mission specific vehicle control model to be used as the "initial" vehicle control model as defined above. Once the mission is completed, the then updated vehicle control model may be used by other vehicles intended to in the future operate in line with the mission.

In a preferred embodiment of the present invention, the on-board control system is provided as a component of the vehicle, typically further comprising the above-mentioned sensors. The vehicle may in turn be e.g. one of a bus, a truck, a car, or any form of construction equipment. The vehicle may furthermore be at least one of a pure electrical vehicle (PEV) and a hybrid electric vehicle (HEV)

According to another aspect of the present invention, there is provided a computer implemented method for operating a control system arranged on-board a vehicle, as defined by claim 10. This aspect of the present invention provides similar advantages as discussed above in relation to the previous aspect of the present invention.

According to a further aspect of the present invention there is provided a computer program product comprising a non-transitory computer readable medium having stored thereon computer program means for operating a control system arranged on-board a vehicle, as defined by claim 15. Also this aspect of the present invention provides similar advantages as discussed above in relation to the previous aspects of the present invention.

The computer readable medium may be any type of memory device, including one of a removable nonvolatile random access memory, a hard disk drive, a floppy disk, a CD-ROM, a DVD-ROM, a USB memory, an SD memory card, or a similar computer readable medium known in the art.

Further advantages and advantageous features of the present invention are disclosed in the following description and in the dependent claims.

### BRIEF DESCRIPTION OF THE DRAWINGS

With reference to the appended drawings, below follows a more detailed description of embodiments of the present invention cited as examples.

In the drawings:
Figs. 1A illustrates a truck, 1B a bus and 1C a wheel loader in which the control system according to the present invention may be incorporated;
Fig. 2 illustrates a conceptual control system in accordance to a currently preferred embodiment of the present invention; and
Fig. 3 illustrates the processing steps for performing the method according to the present invention.

### DETAILED DESCRIPTION OF EXAMPLE EMBODIMENTS OF THE INVENTION

The present invention will now be described more fully hereinafter with reference to the accompanying drawings, in which currently preferred embodiments of the present invention are shown. The invention may, however, be embodied in many different forms and should not be construed as limited to the embodiments set forth herein; rather, these embodiments are provided for thoroughness and completeness.

Like reference characters refer to like elements throughout.

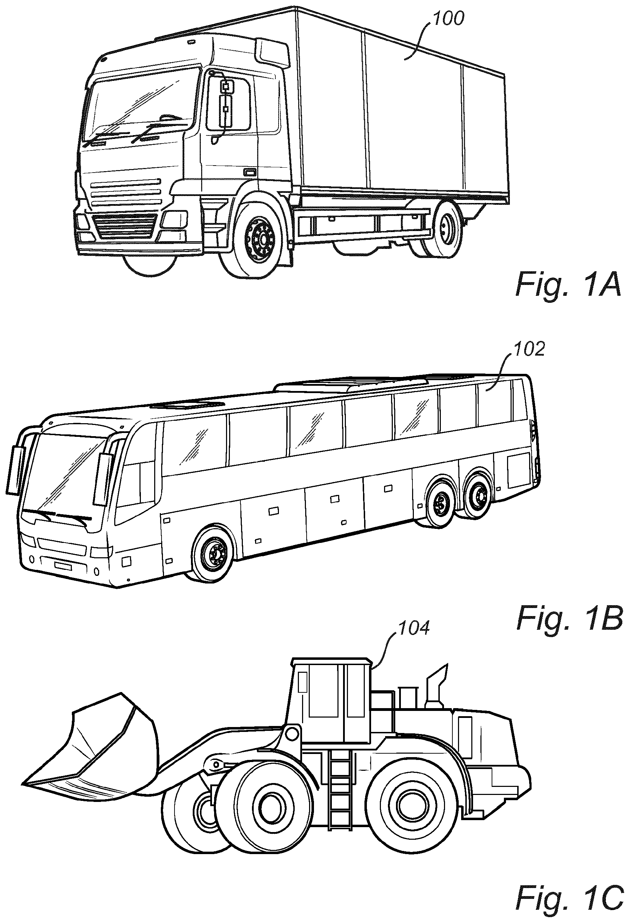

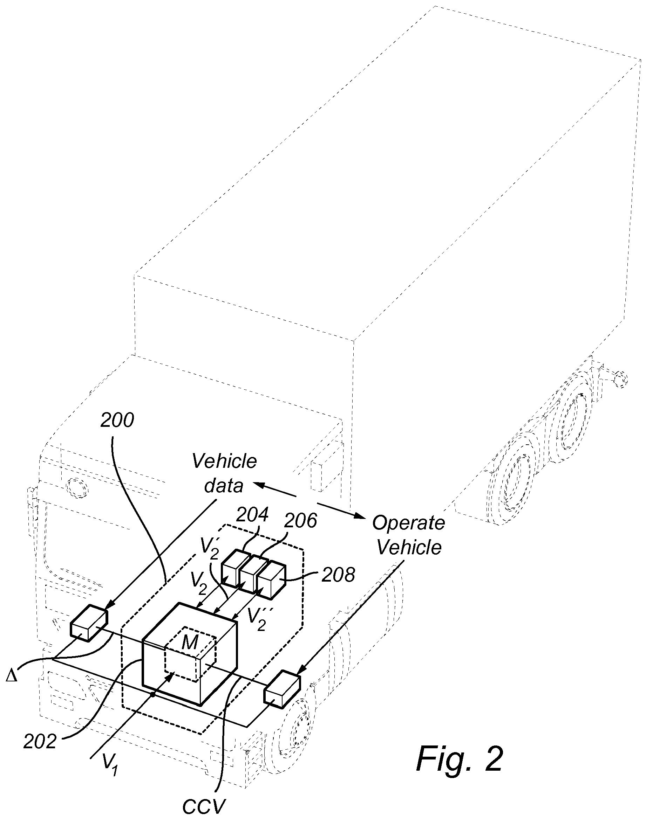

Referring now to the drawings and to Fig. 1A in particular, there is depicted an exemplary vehicle, here illustrated as a truck 100, in which a control system 200 (as shown in Fig. 2) according to the present invention may be incorporated. The control system 200 may of course be implemented, possibly in a slightly different way, in a bus 102 as shown in Fig. 1B, wheel loader as shown in Fig. 1C, a car, a bus, etc.

The vehicle may for example be one of an electric or hybrid vehicle, or possibly a gas, gasoline or diesel vehicle. The vehicle comprises an electric machine (in case of being an electric or hybrid vehicle) or an engine (such as an internal combustion engine in case of being a gas, gasoline or diesel vehicle). The vehicle may further be manually operated, fully or semi-autonomous.

Fig. 2 shows a conceptual and exemplary implementation of the control system 200, comprising a processing circuitry 202, such as an electronic control unit (ECU), adapted for operating e.g. any one of the vehicles 100, 102, 104. The ECU 202 implements an interface for receiving data from a plurality of sensors 204, 206, 208, such as e.g. for measuring one of a speed, an acceleration, an inclination, a torque, etc. of the vehicle 100, 102, 104. The control system 200 may further comprise a database (not shown) for storing a vehicle control model to be used by the ECU 202 in operating the vehicle. The control system 200 may also be provided with an interface for allowing the vehicle control model to be received at and transmitted from the ECU 202, such as from and to a remotely located server (not shown).

For reference, the ECU 202 may for example be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or nonvolatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

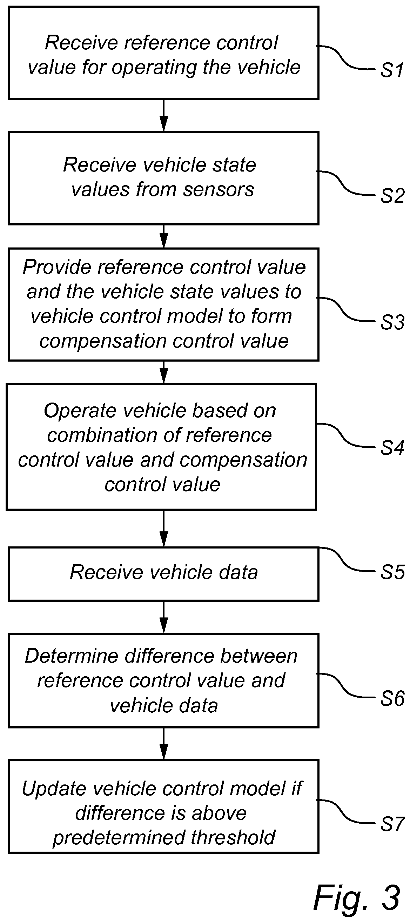

During operation of the control system 200 for controlling the operation of the vehicle 100, 102, 104, with further reference to Fig. 3, the ECU 202 is "loaded" with the vehicle control model, M. As mentioned, the vehicle control model, M, may be seen as a generalized expectation of how a function of the vehicle 100, 102, 104. The vehicle control model, M, may, as also mentioned, be received from e.g. a remote server, or at the time of manufacture of the vehicle 100, 102, 104.

Initially, e.g. the driver or an autonomy process of the vehicle 100, 102, 104 sets a reference control value V1 for operating the vehicle 100, 102, 104, such as e.g. one of a speed or an acceleration for the vehicle 100, 102, 104. The reference control value V1 is received, S1, at the ECU 202. The ECU 202 also receives, S2, vehicle state values V2, V2', V2" from the plurality of sensors 204, 206, 208, such as from sensors adapted for measuring one of a speed, an acceleration, an inclination, a torque, etc. of the vehicle 100, 102, 104. Other data may be provided, such as e.g. a weight of the vehicle 100, 102, 104, etc.

In line with the present invention, the reference control value V1 and the vehicle state values V2, V2', V2" are then provided, S3, as inputs to the vehicle control model, M, which may be seen as e.g. a mathematical representation or set of processing steps of the function of the vehicle. The vehicle control model, M, is in turn adapted to form a compensation control value, CCV. The vehicle 100, 102, 104 is then operated, S4, based on a combination of the reference control value V1 and the compensation control value, CCV.

As indicated above, the ECU 202 preferably implements a control function. The control function, for example implemented as a PID controller, typically receives the reference control value V1 as well as data relating to the present operation of the vehicle 100, 102, 104. The control function then operates to reduce the difference between e.g. the desired speed (i.e. the reference control value V1) and a current speed of the vehicle 100, 102, 104. However, in line with the present disclosure the vehicle control model, M, is used for introduce a dynamic compensation factor, i.e. the compensation control value, CCV, between the output from the control function and the function of the vehicle 100, 102, 104 that is to be controlled.

Furthermore, following the operation of the vehicle 100, 102, 104, the ECU 202 receives, S5, vehicle data VD resulting from the operation of the vehicle 100, 102, 104. The vehicle data VD may typically be seen as how the vehicle currently is behaving as compared to the reference control value V1. Accordingly, a difference Δ is determined, S6, between the vehicle data VD and the reference control value V1. If the difference then is determined to above a predetermined threshold (e.g. the difference is larger than what is desirable), this means that the vehicle control model M is to be updated, S7.

The scheme according to the present invention may thus be seen as a constant recording of different operation points x while the control system 200 runs. This set of samples is then used to recursively regress to a function that describes the operation of the functionality of the vehicle that is described using the vehicle control model, M. It is thus desirable to adapt the vehicle control model M such that an uncertainty of the model is equal to a real uncertainty for the actual operation of the vehicle 100, 102, 104.

Accordingly, in case the control system 200 is operated "long enough" (time → ∞), then the output from the control function (such as implemented as the exemplified PID controller) tends to go towards zero. This will thus mean that the vehicle control model M provides a correct compensation control value CCV for the present operational condition for the vehicle 100, 102, 104.

The present invention contemplates methods, devices and program products on any machine-readable media for accomplishing various operations. The embodiments of the present invention may be implemented using existing computer processors, or by a special purpose computer processor for an appropriate system, incorporated for this or another purpose, or by a hardwired system. Embodiments within the scope of the present invention

include program products comprising machine-readable media for carrying or having machine-executable instructions or data structures stored thereon. Such machine-readable media can be any available media that can be accessed by a general purpose or special purpose computer or other machine with a processor.

By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data that cause a general-purpose computer, special purpose computer, or special purpose processing machines to perform a certain function or group of functions.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. An on-board control system (200) for operating a vehicle (100, 102, 104), the control system (200) comprising processing circuitry (202) and a plurality of sensors (204, 206, 208) arranged with the vehicle (100), the processing circuitry (202) arranged in communication with the plurality of sensors (204, 206, 208), wherein the processing circuitry (200) implements a control function and a vehicle control model (M), wherein the processing circuitry (202) is adapted to:
- receive a reference control value (V1) for operating the vehicle (100, 102, 104),
- receive vehicle state values (V2, V2', V2") from the plurality of sensors (204, 206, 208),
- provide the reference control value (V1) as an input to the control function,
- provide the reference control value (V1) and the vehicle state values (V2, V2', V2") as inputs to the vehicle control model (M), wherein the vehicle control model (M) is adapted to form a compensation control value (CCV) to be applied to an output from the control function to form of a control signal for operating the vehicle (100),
- operate the vehicle (100, 102, 104) based on the control signal,
- receive vehicle data (VD) resulting from the operation of the vehicle (100, 102, 104),
- determine a difference (Δ) between the reference control value (V1) and the vehicle data (VD),
- provide the difference (Δ) to the control function, and
- update the vehicle control model (M) if the determined difference (Δ) is above a predetermined threshold (T).

2. The system (200) according to claim 1, wherein the control function is implemented as a PID controller.

3. The system (200) according to any one of the preceding claims, wherein the reference control value is a desired acceleration value and or a desired speed value for the vehicle.

4. The system (200) according to any one of the preceding claims, wherein the vehicle state values are selected from a group comprising one or a plurality of a road inclination, a vehicle mass, a speed of the vehicle, power limits for the vehicle, gear box ratio.

5. The system (200) according to any one of the preceding claims, wherein the vehicle data is a measured output resulting from the operation of the vehicle.

6. The system (200) according to any one of the preceding claims, wherein the predetermined threshold is dependent on the reference control value.

7. The system (200) according to claim 1, wherein the updated vehicle control model is transmitted to a remote server arranged off-board the vehicle arranged in networked communication with the processing circuitry.

8. The system (200) according to claim 1, wherein an initial vehicle control model is received from a remote server off-board the vehicle arranged in networked communication with the processing circuitry.

9. A vehicle (100, 102, 104), comprising an on-board control system (200) according to any one of claims 1 - 8.

10. A computer implemented method for operating a control system (200) arranged on-board a vehicle (100, 102, 104), the control system (200) comprising processing circuitry (200) and a plurality of sensors (204, 206, 208) arranged with the vehicle, the processing circuitry arranged in communication with the plurality of sensors, wherein the processing circuitry (200) implements a control function and a vehicle control model (M), wherein the method comprises the steps of:
- receiving (S1), at the processing circuitry, a reference control value (V1) for operating the vehicle (100, 102, 104),
- receiving (S2), at the processing circuitry, vehicle state values (V2, V2', V2") from the plurality of sensors,
- providing, by the processing circuitry, the reference control value (V1) as an input to the control function,
- providing (S3), by the processing circuitry, the reference control value and the vehicle state values as inputs to the vehicle control model, wherein the vehicle control model is adapted to form a compensation control value to be applied to an output from the control function to form of a control signal for operating the vehicle,
- operating (S4), by the processing circuitry, the vehicle based on the control signal,
- receiving (S5), at the processing circuitry, vehicle data resulting from the operation of the vehicle,
- determining (S6), at the processing circuitry, a difference (Δ) between the reference control value and the vehicle data,
- providing the difference (Δ) to the control function, and
- updating (S7), at the processing circuitry, the vehicle control model if the determined difference is above a predetermined threshold (T).

11. The method according to claim 10, wherein the reference control value is a desired acceleration value and or a desired speed value for the vehicle.

12. The method according to any one of claims 10 - 11, wherein the vehicle state values are selected from a group comprising one or a plurality of a road inclination, a vehicle mass, a speed of the vehicle, power limits for the vehicle, gear box ratio.

13. The method according to claim 10, wherein the updated vehicle control model (M) is transmitted to a remote server arranged off-board the vehicle arranged in networked communication with the processing circuitry.

14. The method according to claim 10, wherein an initial vehicle control model (M) is received from a remote server off-board the vehicle arranged in networked communication with the processing circuitry (200).

15. A computer program product comprising a non-transitory computer readable medium having stored thereon computer program means for operating a control system (200) arranged on-board a vehicle (100, 102, 104), the control system comprising processing circuitry (202) and a plurality of sensors (204, 206, 208) arranged with the vehicle, the processing circuitry arranged in communication with the plurality of sensors, wherein the processing circuitry (200) implements a control function and a vehicle control model (M), wherein the computer program product comprises:
- code for receiving, at the processing circuitry, a reference control value (V1) for operating the vehicle,
- code for receiving, at the processing circuitry, vehicle state values (V2, V2', V2") from the plurality of sensors,
- code for providing, by the processing circuitry, the reference control value (V1) as an input to the control function,
- code for providing, by the processing circuitry, the reference control value and the vehicle state values as inputs to the vehicle control model, wherein the vehicle control model is adapted to form a compensation control value to be applied to an output from the control function to form of a control signal for operating the vehicle,
- code for operating, by the processing circuitry, the vehicle based on the control signal,
- code for receiving, at the processing circuitry, vehicle data resulting from the operation of the vehicle,
- code for determining, at the processing circuitry, a difference between the reference control value and the vehicle data,
- code for providing the difference (Δ) to the control function, and
- code for updating, at the processing circuitry, the vehicle control model if the determined difference is above a predetermined threshold (T).

## Patentansprüche

1. Bordsteuerungssystem (200) zum Betrieb eines Fahrzeugs (100, 102, 104), das Steuerungssystem (200) umfassend eine Verarbeitungsschaltung (202) und mehrere Sensoren (204, 206, 208), die in dem Fahrzeug (100) angeordnet sind, wobei die Verarbeitungsschaltung (202) in Verbindung mit den mehreren Sensoren (204, 206, 208) angeordnet ist, wobei die Verarbeitungsschaltung (200) eine Steuerungsfunktion und ein Fahrzeugsteuerungsmodell (M) implementiert, wobei die Verarbeitungsschaltung (202) angepasst ist, zum:
- Empfangen eines Referenzsteuerwerts (V1) für den Betrieb des Fahrzeugs (100, 102, 104),
- Empfangen von Fahrzeugzustandswerten (V2, V2', V2") von den mehreren Sensoren (204, 206, 208),
- Bereitstellen des Referenzsteuerwerts (V1) als Eingabe für die Steuerungsfunktion,
- Bereitstellen des Referenzsteuerwerts (V1) und der Fahrzeugzustandswerte (V2, V2', V2") als Eingaben für das Fahrzeugsteuerungsmodell (M), wobei das Fahrzeugsteuerungsmodell (M) angepasst ist, um einen Kompensationssteuerwert (CCV) zu bilden, der auf eine Ausgabe von der Steuerungsfunktion in Form eines Steuersignals zum Betreiben des Fahrzeugs (100) angewendet werden soll,
- Betreiben des Fahrzeugs (100, 102, 104) auf der Grundlage des Steuersignals,
- Empfangen von Fahrzeugdaten (VD), die sich aus dem Betrieb des Fahrzeugs (100, 102, 104) ergeben,
- Bestimmen einer Differenz (Δ) zwischen dem Referenzsteuerwert (V1) und den Fahrzeugdaten (VD),
- Bereitstellen der Differenz (Δ) an die Steuerungsfunktion, und
- Aktualisieren des Fahrzeugsteuerungsmodells (M), wenn die bestimmte Differenz (Δ) über einem vorgegebenen Schwellenwert (T) liegt.

2. System (200) nach Anspruch 1, wobei die Steuerungsfunktion als PID-Regler implementiert ist.

3. System (200) nach einem der vorhergehenden Ansprüche, wobei der Referenzsteuerwert ein gewünschter Beschleunigungswert und/oder ein gewünschter Geschwindigkeitswert für das Fahrzeug ist.

4. System (200) nach einem der vorhergehenden Ansprüche, wobei die Fahrzeugzustandswerte aus einer Gruppe ausgewählt werden, die eines oder mehrere der folgenden Elemente umfasst: eine Straßenneigung, eine Fahrzeugmasse, eine Geschwindigkeit des Fahrzeugs, Leistungsgrenzen für das Fahrzeug, Getriebeübersetzung.

5. System (200) nach einem der vorhergehenden Ansprüche, wobei die Fahrzeugdaten eine gemessene Ausgabe sind, die aus dem Betrieb des Fahrzeugs resultiert.

6. System (200) nach einem der vorhergehenden Ansprüche, wobei der vorgegebene Schwellenwert von dem Referenzsteuerwert abhängig ist.

7. System (200) nach Anspruch 1, wobei das aktualisierte Fahrzeugsteuerungsmodell an einen außerhalb des Fahrzeugs angeordneten Remote-Server übertragen wird, der in vernetzter Kommunikation mit der Verarbeitungsschaltung steht.

8. System (200) nach Anspruch 1, wobei ein anfängliches Fahrzeugsteuerungsmodell von einem Remote-Server außerhalb des Fahrzeugs empfangen wird, der in vernetzter Kommunikation mit der Verarbeitungsschaltung angeordnet ist.

9. Fahrzeug (100, 102, 104), umfassend ein Bordsteuerungssystem (200) nach einem der Ansprüche 1-8.

10. Computer-implementiertes Verfahren zum Betrieb eines an Bord eines Fahrzeugs (100, 102, 104) angeordneten Steuerungssystems (200), wobei das Steuerungssystem (200) eine Verarbeitungsschaltung (200) und mehrere Sensoren (204, 206, 208) umfasst, die in dem Fahrzeug angeordnet sind, wobei die Verarbeitungsschaltung in Verbindung mit den mehreren Sensoren angeordnet ist, wobei die Verarbeitungsschaltung (200) eine Steuerungsfunktion und ein Fahrzeugsteuerungsmodell (M) implementiert, wobei das Verfahren die folgenden Schritte umfasst:
- Empfangen (S1) eines Referenzsteuerwerts (V1) für den Betrieb des Fahrzeugs (100, 102, 104) in der Verarbeitungsschaltung,
- Empfangen (S2) von Fahrzeugzustandswerten (V2, V2', V2") von den mehreren Sensoren in der Verarbeitungsschaltung,
- Bereitstellen des Referenzsteuerwerts (V1) durch die Verarbeitungsschaltung als Eingabe für die Steuerungsfunktion,
- Bereitstellen (S3) des Referenzsteuerwerts und der Fahrzeugzustandswerte durch die Verarbeitungsschaltung als Eingaben für das Fahrzeugsteuerungsmodell, wobei das Fahrzeugsteuerungsmodell angepasst ist, um einen Kompensationssteuerwert zu bilden, der auf eine Ausgabe von der Steuerungsfunktion in Form eines Steuersignals zum Betreiben des Fahrzeugs angewendet werden soll,
- Betreiben (S4) des Fahrzeugs durch die Verarbeitungsschaltung auf der Grundlage des Steuersignals,
- Empfangen (S5) von Fahrzeugdaten in der Verarbeitungsschaltung, die sich aus dem Betrieb des Fahrzeugs ergeben,
- Bestimmen (S6) einer Differenz (Δ) zwischen dem Referenzsteuerwert und den Fahrzeugdaten in der Verarbeitungsschaltung,
- Bereitstellen der Differenz (Δ) an die Steuerungsfunktion, und
- Aktualisieren (S7) des Fahrzeugsteuerungsmodells in der Verarbeitungsschaltung, wenn die bestimmte Differenz über einem vorgegebenen Schwellenwert (T) liegt.

11. Verfahren nach Anspruch 10, wobei der Referenzsteuerwert ein gewünschter Beschleunigungswert und/oder ein gewünschter Geschwindigkeitswert für das Fahrzeug ist.

12. Verfahren nach einem der vorhergehenden Ansprüche 10-11 wobei die Fahrzeugzustandswerte aus einer Gruppe ausgewählt werden, die eines oder mehrere der folgenden Elemente umfasst: eine Straßenneigung, eine Fahrzeugmasse, eine Geschwindigkeit des Fahrzeugs, Leistungsgrenzen für das Fahrzeug, Getriebeübersetzung.

13. Verfahren nach Anspruch 10, wobei das aktualisierte Fahrzeugsteuerungsmodell (M) an einen außerhalb des Fahrzeugs angeordneten Remote-Server übertragen wird, der in vernetzter Kommunikation mit der Verarbeitungsschaltung steht.

14. Verfahren nach Anspruch 10, wobei ein anfängliches Fahrzeugsteuerungsmodell (M) von einem Remote-Server außerhalb des Fahrzeugs empfangen wird, der in vernetzter Kommunikation mit der Verarbeitungsschaltung (200) angeordnet ist.

15. Computerprogrammprodukt, das ein nicht-transitorisches computerlesbares Medium umfasst, auf dem Computerprogrammmittel zum Betreiben eines an Bord eines Fahrzeugs (100, 102, 104) angeordneten Steuerungssystems (200) gespeichert sind, wobei das Steuerungssystem eine Verarbeitungsschaltung (202) und mehrere Sensoren (204, 206, 208) umfasst, die in dem Fahrzeug angeordnet sind, wobei die Verarbeitungsschaltung in Verbindung mit den mehreren Sensoren angeordnet ist, wobei die Verarbeitungsschaltung (200) eine Steuerungsfunktion und ein Fahrzeugsteuerungsmodell (M) implementiert, wobei das Computerprogrammprodukt umfasst:
- Code zum Empfangen eines Referenzsteuerwerts (V1) für den Betrieb des Fahrzeugs in der Verarbeitungsschaltung,
- Code zum Empfangen von Fahrzeugzustandswerten (V2, V2', V2") von den mehreren Sensoren in der Verarbeitungsschaltung,
- Code zum Bereitstellen des Referenzsteuerwerts (V1) durch die Verarbeitungsschaltung als Eingabe für die Steuerungsfunktion,
- Code zum Bereitstellen des Referenzsteuerwerts und der Fahrzeugzustandswerte durch die Verarbeitungsschaltung als Eingaben für das Fahrzeugsteuerungsmodell, wobei das Fahrzeugsteuerungsmodell angepasst ist, um einen Kompensationssteuerwert zu bilden, der auf eine Ausgabe von der Steuerungsfunktion in Form eines Steuersignals zum Betreiben des Fahrzeugs angewendet werden soll,
- Code zum Betreiben des Fahrzeugs durch die Verarbeitungsschaltung auf der Grundlage des Steuersignals,
- Code zum Empfangen von Fahrzeugdaten in der Verarbeitungsschaltung, die sich aus dem Betrieb des Fahrzeugs ergeben,
- Code zum Bestimmen einer Differenz zwischen dem Referenzsteuerwert und den Fahrzeugdaten in der Verarbeitungsschaltung,
- Code zum Bereitstellen der Differenz (Δ) an die Steuerungsfunktion, und
- Code zum Aktualisieren des Fahrzeugsteuerungsmodells in der Verarbeitungsschaltung, wenn die bestimmte Differenz über einem vorgegebenen Schwellenwert (T) liegt.

## Revendications

1. Système de commande embarqué (200) pour commander un véhicule (100,102,104), le système de commande (200) comprenant des circuits de traitement (202) et une pluralité de capteurs (204,206,208) disposés avec le véhicule (100), les circuits de traitement (202) étant disposés en communication avec la pluralité de capteurs (204,206,208), et les circuits de traitement (200) mettant en œuvre une fonction de commande et un modèle de commande de véhicule (M), les circuits de traitement (202) étant aptes à :
- recevoir une valeur de commande de référence (V1) pour commander le véhicule (100,102,104),
- recevoir des valeurs d'état de véhicule (V2, V2', V2") de la part de la pluralité de capteurs (204,206,208),
- fournir la valeur de commande de référence (V1) sous forme d'une entrée dans la fonction de commande,
- fournir la valeur de commande de référence (V1) et les valeurs d'état de véhicule (V2, V2', V") sous la forme d'entrées dans le modèle de commande de véhicule (M), le modèle de commande de véhicule (M) étant apte à former une valeur de commande de compensation (CCV) à appliquer à une sortie de la fonction de commande pour former un signal de commande pour commander le véhicule (100),
- commander le véhicule (100,102,104) en se basant sur le signal de commande,
- recevoir des données de véhicule (VD) résultant de la commande du véhicule (100,102,104),
- déterminer une différence (Δ) entre la valeur de commande de référence (V1) et les données de véhicule (VD),
- fournir la différence (Δ) à la fonction de commande, et
- actualiser le modèle de commande de véhicule (M) si la différence déterminée (Δ) est supérieure à un seuil prédéterminé (T).

2. Système (200) selon la revendication 1, dans lequel la fonction de commande est mise en œuvre sous forme d'un organe de commande PID.

3. Système (200) selon l'une quelconque des revendications précédentes, dans lequel la valeur de commande de référence est une valeur d'accélération désirée ou une valeur de vitesse désirée pour le véhicule.

4. Système (200) selon l'une quelconque des revendications précédentes, dans lequel les valeurs d'état de véhicule sont sélectionnées dans un groupe comprenant un paramètre parmi une pluralité composée d'une inclinaison de route, d'une masse de véhicule, d'une vitesse de véhicule, de limites de puissance pour le véhicule, d'un rapport de boîte de vitesses.

5. Système (200) selon l'une quelconque des revendications précédentes, dans lequel les données de véhicule sont une sortie mesurée résultant de la commande du véhicule.

6. Système (200) selon l'une quelconque des revendications précédentes, dans lequel le seuil prédéterminé dépend de la valeur de commande de référence.

7. Système (200) selon la revendication 1, dans lequel le modèle de commande de véhicule est transmis à un serveur distant disposé hors du bord du véhicule et disposé en communication en réseau avec les circuits de traitement.

8. Système (200) selon la revendication 1, dans lequel le modèle de commande de véhicule initial est reçu de la part d'un serveur distant situé hors du bord du véhicule et disposé en communication en réseau avec les circuits de traitement.

9. Véhicule (100,102,104) comprenant un système de commande embarqué (200) selon l'une quelconque des revendications 1 à 8.

10. Procédé mis en œuvre par ordinateur pour l'actionnement d'un système de commande (200) disposé embarqué sur un véhicule (100,102,104) le système de commande (200) comprenant des circuits de traitement (200) et une pluralité de capteurs (204,206,208) disposés avec le véhicule, les circuits de traitement (200) étant disposés en communication avec la pluralité de capteurs, les circuits de traitement (200) mettant en œuvre une fonction de commande et un modèle de commande de véhicule (M), ce procédé comprenant les étapes suivantes :
- réception (S1), dans les circuits de traitement, d'une valeur de commande de référence (V1) pour commander le véhicule (100,102,104),
- réception (S2), dans les circuits de traitement, de valeurs d'état de véhicule (V2, V2', V2") de la part de la pluralité de capteurs (204,206,208),
- fourniture, par le circuit de traitement, de la valeur de commande de référence (V1) sous forme d'une entrée dans la fonction de commande,
- fourniture (S3), par les circuits de traitement, de la valeur de commande de référence et des valeurs d'état de véhicule sous la forme d'entrées dans le modèle de commande de véhicule, le modèle de commande de véhicule étant apte à former une valeur de commande de compensation à appliquer à une sortie de la fonction de commande pour former un signal de commande pour commander le véhicule,
- commander le véhicule (S4) à l'aide des circuits de traitement en se basant sur le signal de commande,
- recevoir (S5), dans les circuits de traitement, des données de véhicule résultant de la commande du véhicule,
- déterminer (S6), dans les circuits de traitement, une différence (Δ) entre la valeur de commande de référence et les données de véhicule,
- fournir la différence (Δ) à la fonction de commande, et
- actualiser (S7), dans les circuits de traitement, le modèle de commande de véhicule si la différence déterminée est supérieure à un seuil prédéterminé (T) .

11. Procédé selon la revendication 10, dans lequel la valeur de commande de référence est une valeur d'accélération désirée ou une valeur de vitesse désirée pour le véhicule.

12. Procédé selon l'une quelconque des revendications 10 et 11, dans lequel les valeurs d'état de véhicule sont sélectionnées dans un groupe comprenant un paramètre parmi une pluralité composée d'une inclinaison de route, d'une masse de véhicule, d'une vitesse de véhicule, de limites de puissance pour le véhicule, d'un rapport de boîte de vitesses.

13. Procédé selon la revendication 10, dans lequel le modèle de commande de véhicule actualisé (M) est transmis à un serveur distant disposé hors du bord du véhicule et disposé en communication en réseau avec les circuits de traitement.

14. Procédé selon la revendication 10, dans lequel un modèle de commande de véhicule initial (M) est reçu en provenance d'un serveur distant situé hors du bord du véhicule et disposé en communication en réseau avec les circuits de traitement (200).

15. Produit de programmation informatique comprenant un support non transitoire lisible par ordinateur sur lequel est sauvegardé un moyen de programmation informatique pour actionner un système de commande (200) embarqué sur un véhicule (100,102,104), le système de commande comprenant des circuits de traitement (202) et une pluralité de capteurs (204,206,208) disposés avec le véhicule, les circuits de traitement étant disposés en communication avec la pluralité de capteurs, les circuits de traitement (200) mettant en œuvre une fonction de commande et un modèle de commande de véhicule (M), ce produit de programmation informatique comprenant :
- un code pour recevoir, dans le circuit de traitement, une valeur de commande de référence (V1) pour commander le véhicule,
- un code pour recevoir, dans le circuit de traitement, des valeurs d'état de véhicule (V2, V2', V2") de la part de la pluralité de capteurs,
- un code pour fournir, à l'aide des circuits de traitement, la valeur de commande de référence (V1) sous forme d'une entrée dans la fonction de commande,
- un code pour fournir, à l'aide des circuits de traitement, la valeur de commande de référence et les valeurs d'état de véhicule sous la forme d'entrées dans le modèle de commande de véhicule, le modèle de commande de véhicule étant apte à former une valeur de commande de compensation à appliquer à une sortie de la fonction de commande pour former un signal de commande pour commander le véhicule,
- un code pour commander le véhicule à l'aide des circuits de traitement en se basant sur le signal de commande,
- un code pour recevoir, dans les circuits de traitement, des données de véhicule résultant de la commande du véhicule,
- un code pour déterminer, dans les circuits de traitement, une différence entre la valeur de commande de référence et les données de véhicule,
- un code pour fournir la différence (Δ) à la fonction de commande, et
- un code pour actualiser, dans les circuits de traitement, le modèle de commande de véhicule si la différence déterminée est supérieure à un seuil prédéterminé (T).
